# EUROPÄISCHE PATENTSCHRIFT

(11) **EP 3 890 438 B1**
(45) Veröffentlichungstag und Bekanntmachung des Hinweises auf die Patenterteilung: **14.12.2022**
(21) Anmeldenummer: 21163648.5
(22) Anmeldetag: 19.03.2021
(51) Int. Cl.: H05B 6/06

(54) **VERFAHREN ZUM BEHEIZEN EINES KOCHGEFÄSSES AUF EINEM KOCHFELD UND KOCHFELD**
HOB AND METHOD FOR HEATING A COOKING VESSEL ON A HOB
PROCÉDÉ DE CHAUFFAGE D'UN RÉCIPIENT DE CUISSON SUR UNE PLAQUE DE CUISSON ET PLAQUE DE CUISSON

(30) Priorität: 01.04.2020 DE 102020204252
(43) Veröffentlichungstag der Anmeldung: 06.10.2021
(73) Patentinhaber: E.G.O. Elektro-Gerätebau GmbH, 75038 Oberderdingen (DE)
(72) Erfinder: Frank, Marcus, 75056 Sulzfeld (DE); Lehner, Marius, 75417 Mühlacker (DE)
(74) Vertreter: Patentanwälte Ruff, Wilhelm, Beier, Dauster & Partner mbB

(56) Entgegenhaltungen:
- DE-A1-102009 029 253
- DE-A1-102012 200 294
- DE-A1-102018 119 953

## Beschreibung

### ANWENDUNGSGEBIET UND STAND DER TECHNIK

Die Erfindung betrifft ein Verfahren zum Beheizen eines Kochgefäßes auf einem Kochfeld mit mehreren Heizeinrichtungen und ein entsprechend ausgebildetes Kochfeld.

Aus der EP 3 668 274 A1 ist es bekannt, sogenannte smarte Kochgefäße auf einem Kochfeld einer Kochstelle bzw. einer Induktionsheizeinrichtung zuzuordnen. Dazu sollen die smarten Kochgefäße sicher erkannt werden, indem die Induktionsheizeinrichtung Energie in einem bestimmten Muster bzw. mit einer bestimmten Codierung erzeugt und diese Codierung am Kochgefäß erkannt wird. Entsprechende Daten samt Identifikation werden von dem Kochgefäß an eine Steuerung des Kochfelds gesandt, und wenn dies mit der Erzeugung von Energie an der Induktionsheizeinrichtung übereinstimmt wird dieses Kochgefäß dieser Induktionsheizeinrichtung zugeordnet.

Aus der DE 10 2012 200 294 A1 ist es bekannt, anstelle eines vorgenannten smarten Kochgefäßes einen länglichen Temperatursensor in einem üblichen Kochgefäß auf einem Kochfeld anzuordnen, wobei der Temperatursensor eine Funkschnittstelle an das Kochfeld aufweist. Dann kann damit ein vorgenanntes Verfahren zur Erkennung der Zuordnung eines üblichen Kochgefäßes zu einer Kochstelle erfolgen. Die am Kochgefäß ankommende Energie von der Kochstelle wird durch die Temperatur vom Temperatursensor erkannt.

Aus der DE 10 2018 119 953 A1 und der De 10 2009 029 253 A1 sind weitere Verfahren bekannt, bei denen ähnlich wie bei der vorgenannten EP 3 668 274 A1 ein smartes Kochgefäß mit integriertem Temperatursensor und Funkschnittstelle zum Einsatz kommt. Damit kann eine Zuordnung zu einer Kochstelle bzw. zu einer Induktionsheizeinrichtung erfolgen.

### AUFGABE UND LÖSUNG

Der Erfindung liegt die Aufgabe zugrunde, ein eingangs genanntes Verfahren zum Beheizen eines Kochgefäßes auf einem Kochfeld sowie ein eingangs genanntes Kochfeld zu schaffen, mit denen Probleme des Standes der Technik gelöst werden können und es insbesondere möglich ist, ein Kochgefäß gut beheizen zu können und vor allem ein sogenanntes smartes Kochgefäß mit Temperatursensor samt Auswertevorrichtung und Sendevorrichtung zum Senden einer Identifikation und von Temperaturdaten beheizen zu können.

Gelöst wird diese Aufgabe durch ein Verfahren mit den Merkmalen des Anspruchs 1 sowie durch ein Kochfeld mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für das Kochfeld beschrieben. Sie sollen jedoch unabhängig davon sowohl für ein Verfahren als auch für ein Kochfeld selbständig und unabhängig voneinander gelten können.

Es ist bei dem Verfahren vorgesehen, dass jede Heizeinrichtung einen Heizbereich bzw. eine Kochstelle aufweist, insbesondere die Fläche darüber, und ein Kochgefäß so auf dem Kochfeld angeordnet werden kann, dass es diesen Heizbereich überdeckt. Jede Heizeinrichtung ist dabei zum Erzeugen und Übertragen von Energie ausgebildet ist zum Beheizen eines darüber angeordneten Kochgefäßes und wird dazu von einer Leistungsversorgung angesteuert. Eine Heizeinrichtung kann aus mehreren einzelnen Heizelementen bestehen oder mehrere einzelne Heizelemente aufweisen, beispielsweise nach Art einer Zwei-Kreis-Heizung oder einem induktiven Flächenkochen. Sie können zwar grundsätzlich einzeln betrieben werden, werden dann vorteilhaft für das erfindungsgemäße Verfahren gemeinsam wie ein einziges betrieben. Die Heizeinrichtung kann beispielsweise eine Strahlungsheizeinrichtung sein, die direkt an Netzspannung angeschlossen wird und mit Relais taktend betrieben wird, oder eine Induktionsheizspule, die von einer Leistungselektronik angesteuert wird mit variabler Leistungshöhe. Es kann auch vorgesehen sein, dass mehrere dieser Strahlungsheizeinrichtungen oder mehrere dieser Induktionsheizspulen jeweils als Heizelemente eine erfindungsgemäße Heizeinrichtung bilden. Das Kochgefäß weist einen Temperatursensor samt Auswertevorrichtung auf, mit dem eine Temperatur bzw. eine Temperaturänderung am Kochgefäß erkannt werden kann. Dabei wird der Heizbereich der Heizeinrichtung von dem Kochgefäß zumindest teilweise überdeckt. Dazu kann der Temperatursensor an einer günstigen Stelle am Kochgefäß angeordnet sein, beispielsweise am Boden des Kochgefäßes oder innen im Kochgefäß. Er erfasst eine Temperatur bzw. eine Temperaturänderung aufgrund des Beheizens. Es ist auch eine Sendevorrichtung vorgesehen zum Senden von einer eindeutigen Identifikation des Kochgefäßes und von Temperaturdaten des Temperatursensors in Abhängigkeit von der empfangenen Energie der Heizeinrichtung in Form eines Temperaturanstiegs am Temperatursensor. Diese Identifikation des Kochgefäßes kann eindeutig sein und je nur für ein einziges Kochgefäß vergeben sein.

Für das Kochfeld ist eine Empfangseinrichtung vorgesehen zum Empfangen der Identifikation und der Temperaturdaten von der Sendevorrichtung eines Kochgefäßes bzw. aller Sendevorrichtungen von Kochgefäßen auf dem Kochfeld oder im Empfangsbereich der Empfangseinrichtung, also möglicherweise auch auf einer Arbeitsfläche neben dem Kochfeld oder in einem Schrank darunter. Für das Kochfeld ist eine Steuerung vorgesehen, die die Identifikation und die Temperaturdaten von der Empfangseinrichtung erhält und hinsichtlich Informationen zu einem Übertragen von Energie der Heizeinrichtung auswertet. Die Steuerung weiß also, welche Temperaturdaten und somit welche Temperaturänderung an welchem Kochgefäß stattfindet bzw. stattgefunden hat, und sie kennt aufgrund der spezifischen Identifikation auch dieses Kochgefäß bzw. kann es damit von anderen Kochgefäßen unterscheiden.

Das Verfahren weist die im Folgenden genannten Schritte auf. Zuerst wird mindestens ein vorgenanntes Kochgefäß, also eines mit Temperatursensor samt Auswertevorrichtung und Sendevorrichtung, über einem Heizbereich einer Heizeinrichtung angeordnet. Mindestens diese Heizeinrichtung wird angesteuert von der Leistungsversorgung, vorteilhaft mittels sogenannter Energiedaten, zum Erzeugen und Übertragen von Energie an das Kochgefäß in einem Zyklus. Innerhalb dieses Zyklus werden dabei Dauer und/oder Maximalwert des Übertragens von Energie variiert. Die Variation in einem Zyklus besteht darin, dass der Maximalwert der übertragenen Energie über der Zeit variiert, und/oder die Dauer des Übertragens von Energie variiert, und/oder die Dauer zwischen zwei Vorgängen des Übertragens von Energie variiert, und/oder die Anzahl der Vorgänge des Übertragens von Energie variiert. Vorteilhaft variieren mehrere der vorgenannten Optionen.

Der Temperatursensor des Kochgefäßes registriert nach Beginn des Betriebs der Heizeinrichtung bzw. des Erzeugens von Energie eine Änderung bzw. einen Anstieg der Temperatur infolge des Übertragens von Energie. Die Auswertevorrichtung des Kochgefäßes, vorzugsweise jedes Kochgefäßes, wertet die Änderung bzw. den zeitlichen Verlauf der Temperatur als Temperaturdaten aus und sendet die Identifikation dieses Kochgefäßes und diese Temperaturdaten mittels der Sendevorrichtung an die Empfangseinrichtung. Die Empfangseinrichtung erhält die gesendeten Identifikation und Temperaturdaten, vorzugsweise alle Identifikationen und Temperaturdaten, die von Kochgefäßen empfangen werden, und gibt sie an die Steuerung weiter. Die Steuerung wiederum berechnet, vorzugsweise am Ende jedes Zyklus oder nach jedem Zyklus, eine Relation, insbesondere der Einfachheit halber das Verhältnis bzw. der Quotient, der durch die Heizeinrichtung erzeugten Energie zur entstandenen Temperaturdifferenz bzw. Temperaturerhöhung am Temperatursensor, was ein 1. Plausibilitätsergebnis bildet. Die Steuerung berechnet auch eine Relation, insbesondere der Einfachheit halber das Verhältnis, der ersten zeitlichen Ableitung der durch die Heizeinrichtung erzeugten Energie zur maximalen ersten zeitlichen Ableitung der Temperatur am Temperatursensor, was ein 2. Plausibilitätsergebnis bildet. Vorteilhaft nimmt man die jeweiligen Momentanwerte nach einer Erzeugung von Energie an der Heizeinrichtung, wenn also keine Energie mehr erzeugt wird. Insbesondere wird beim jeweiligen Berechnen der Relationen für das Plausibilitätsergebnis das Verhältnis genommen, also der Wert für die Energie durch den Wert für die Temperatur dividiert. Dieses 1. und 2. Plausibilitätsergebnis werden von der Steuerung zwischengespeichert. Nach jedem Zyklus wird für die empfangenen Temperaturdaten eine Überprüfung der Veränderung der absoluten Temperatur am Temperatursensor durchgeführt und diese Veränderung wird als ein 3. Plausibilitätsergebnis von der Steuerung zwischengespeichert.

Dieser Zyklus des Erzeugens und Übertragens von Energie wird mindestens zweimal durchgeführt auf dieselbe Art und Weise, vorteilhaft genau dreimal, wobei bei jedem und nach jedem Durchführen die drei Plausibilitätsergebnisse jeweils berechnet und zwischengespeichert werden. Dann führt die Steuerung für jedes der drei Plausibilitätsergebnisse eine Plausibilitätsprüfung durch, und bei der Plausibilitätsprüfung wird überprüft, ob das jeweilige Plausibilitätsergebnis in einem für dieses Plausibilitätsergebnis vordefinierten und in der Steuerung abgespeicherten Plausibilitätsbereich liegt. Dieser Plausibilitätsbereich ist so weit aufgespannt, dass ein Plausibilitätsergebnis nur darin liegt, dann aber auch sicher, wenn das Kochgefäß über der Heizeinrichtung angeordnet ist.

In dem Fall, dass alle drei Plausibilitätsprüfungen positiv waren, wird das Kochgefäß mit dieser Identifikation dieser Heizeinrichtung zugeordnet, an das zuvor die Energie erzeugt und übertragen hat. Die Änderung der Temperatur am Kochgefäß, die vom Temperatursensor erfasst worden ist, passt also zu der Erzeugung von Energie an dieser Heizeinrichtung. In dem Fall, dass allerdings mindestens eine Plausibilitätsprüfung negativ war, wird das Kochgefäß mit dieser Identifikation nicht dieser Heizeinrichtung und insbesondere keiner Heizeinrichtung zugeordnet. Es kann eine Fehlermeldung am Kochfeld ausgegeben werden. Der Grund kann darin liegen, dass ein Kochgefäß erfasst worden ist bzw. dessen Signale erfasst worden sind, das nicht über der Heizeinrichtung angeordnet war.

Diese Schritte werden als Überprüfung für alle von der Empfangseinrichtung empfangenen Identifikationen und Temperaturdaten von Kochgefäßen mit Temperatursensor, Auswertevorrichtung und Sendevorrichtung durchgeführt. In dem Fall, dass keine Überprüfung von Temperaturdaten eines Kochgefäßes bei allen drei Plausibilitätsprüfungen während der mindestens zwei Zyklen positiv war, geht die Steuerung davon aus, dass ein Kochgefäß mit Temperatursensor samt Auswertevorrichtung und Sendevorrichtung zwar auf dem Kochfeld oder in der Nähe aufgestellt ist, aber eben nicht auf der Heizeinrichtung selbst, für die und mit der die Überprüfung durchgeführt worden ist. In dem Fall, dass nur genau eine einzige Überprüfung von Temperaturdaten eines Kochgefäßes bei allen drei Plausibilitätsprüfungen während der mindestens zwei Zyklen positiv war, wird von genau einem einzigen Kochgefäß mit Temperatursensor samt Auswertevorrichtung und Sendevorrichtung auf dem Kochfeld ausgegangen, und zwar auch genau auf der Heizeinrichtung selbst, für die und mit der die Überprüfung durchgeführt worden ist. Das ist ein gewünschtes Ergebnis, und dieses Kochgefäß kann dann mit einer Temperaturerfassung und beispielsweise einem Automatikprogramm auf dieser Heizeinrichtung beheizt werden. Die anderen möglichen Fälle werden nachfolgend noch als Optionen beschrieben.

Somit ist es mit der Erfindung möglich, sogenannte smarte Kochgefäße mit Temperatursensor auf einem geeigneten Kochfeld zu erkennen, einer Heizeinrichtung zuzuordnen und dann zu beheizen, wobei beim Beheizen eine Temperaturregelung möglich ist, vorzugsweise für ein Automatikprogramm. Derartige Automatikprogramme mit solchen Kochgefäßen mit Temperatursensor sind aus dem Stand der Technik bekannt, siehe die eingangs genannte EP 3668274 A1 sowie die EP 3001771 A1.

In Ausgestaltung der Erfindung kann in dem Fall, dass mehrere Überprüfungen von Temperaturdaten eines Kochgefäßes bei allen der drei genannten Plausibilitätsprüfungen während der mindestens zwei Zyklen positiv waren, überprüft werden, ob die Temperaturdaten von verschiedenen Kochgefäßen mit verschiedenen Identifikationen empfangen worden sind. In diesem Fall erfolgt keine Zuordnung eines Kochgefäßes zu einer Heizeinrichtung, da wahrscheinlich diese mehreren verschiedenen Kochgefäße auf derselben Heizeinrichtung stehen oder über sie überlappen, wodurch ein Automatikprogramm an dieser Heizeinrichtung nicht durchgeführt werden kann. In dem Fall, dass die Temperaturdaten von einem einzigen Kochgefäß mit einer einzigen Identifikation empfangen worden sind, wird dieses Kochgefäß der Heizeinrichtung zugeordnet. Dies ist der gewünschte Fall für das Durchführen eines Automatikprogramms.

In weiterer Ausgestaltung der Erfindung erfolgt in dem Fall, dass nur eine einzige Überprüfung von Temperaturdaten eines Kochgefäßes bei allen drei Plausibilitätsprüfungen während der mindestens zwei Zyklen bzw. während aller durchgeführten Zyklen positiv war, das hierzu gehörige Kochgefäß aber schon einer anderen Heizeinrichtung zugeordnet war, keine neue Zuordnung dieses Kochgefäßes. Es steht dann möglicherweise noch über der anderen Heizeinrichtung, allerdings muss diese Zuordnung gelöscht werden. Das Ergebnis ist nicht plausibel, und kommt möglicherweise daher, dass während der Plausibilitätsprüfung das Kochgefäß verschoben worden ist, das Kochfeld dies aber nicht registriert hat.

In nochmals weiterer Ausgestaltung der Erfindung wird in dem Fall, dass mehrere Überprüfungen von Temperaturdaten bei allen drei Plausibilitätsprüfungen während der mindestens zwei Zyklen positiv waren, das Kochgefäß, dessen Temperaturdaten überprüft worden sind und dabei die Plausibilitätsprüfungen positiv waren, aber schon einer anderen Heizeinrichtung zugeordnet ist als derjenigen, die die Energie erzeugt und übertragen hat, ein Fehler erkannt. Dann kann jede Zuordnung eines Kochgefäßes zu einer Heizeinrichtung bei dem Kochfeld gelöscht werden, da offensichtlich ein bedeutenderer Fehler vorliegt und erkannt worden ist. Es kann auch vorgesehen sein, dass mehrere Kochgefäße bzw. deren Temperaturdaten überprüft werden, aber nur bei einem Kochgefäß die Überprüfung positiv war. Dann wird auch nur dieses Kochgefäß der entsprechenden Heizeinrichtung zugeordnet.

Es kann einerseits vorgesehen sein, dass das Verfahren gleichzeitig nur mit einer einzigen Heizeinrichtung des Kochfelds durchgeführt wird, wobei vorzugsweise andere Heizeinrichtungen des Kochfelds zwar betrieben werden zum Erzeugen und Übertragen von Energie, aber nicht entsprechend einem vorgenannten Zyklus. Es soll also nur für diese Heizeinrichtung nach darüber aufgestellten smarten Kochgefäßen gesucht werden.

Es kann andererseits vorgesehen sein, dass das Verfahren gleichzeitig mit mindestens zwei Heizeinrichtungen des Kochfelds durchgeführt wird, insbesondere sogar bei allen Heizeinrichtungen des Kochfelds. Dabei ist bei den mindestens zwei Heizeinrichtungen das Erzeugen und Übertragen von Energie hinsichtlich mindestens einer der vorgenannten Variationen von Maximalwert, Dauer des Übertragens, Dauer zwischen zwei Vorgängen oder Anzahl der Vorgänge unterschiedlich. So werden die mindestens zwei Heizeinrichtungen also unterschiedlich betrieben, sodass von den zurückgesandten Temperaturdaten eindeutig auf die Heizeinrichtung geschlossen werden kann.

Das Kochgefäß weist vorteilhaft neben der Sendevorrichtung auch noch einen integrierten Schaltkreis auf, insbesondere als Auswertevorrichtung, vorzugsweise einen Microcontroller. Es kann auch ein Energiespeicher wie eine Batterie, ein Akkumulator oder ein Kondensator vorgesehen sein, also austauschbar oder wieder aufladbar.

Bevorzugt wird die Heizeinrichtung von der Leistungsversorgung derart angesteuert, dass ein spezielles Muster erzeugt wird, das von einer Bedienperson nicht im normalen Betrieb verwendet wird. So kann eine zufällige Bestätigung an einer Heizeinrichtung bzw. einem Kochgefäß vermieden werden. In einem genannten Zyklus kann vorteilhaft mindestens zweimal, vorzugsweise dreimal, Energie mit mehr als 30% der maximalen dauerhaft erzeugbaren Energie als hohe Energie von der Heizeinrichtung erzeugt werden und übertragen werden. Dadurch kann auch in relativ kurzer Zeit, beispielsweise weniger als 30 sec, eine vom Temperatursensor deutlich erfassbare Temperaturänderung am Kochgefäß bewirkt werden. Zwischen jedem Mal Erzeugen von hoher Energie kann die Heizeinrichtung derart angesteuert werden, dass nur geringe Energie mit weniger als 15 % der maximalen dauerhaft erzeugbaren Energie erzeugt wird. Alternativ kann hier auch vorgesehen sein, dass dazwischen die Heizeinrichtung ausgeschaltet bleibt. Wichtig ist hier sozusagen der Unterschied zwischen erzeugter hoher Energie und erzeugter geringer Energie.

In einem genannten Zyklus kann das Erzeugen von hoher Energie mit mehr als 30 % der maximal dauerhaft erzeugbaren Energie ansteigen jeweils nach einem Erzeugen von geringerer Energie, vorzugsweise jeweils um 20 % bis 50 % ansteigen. So kann zweimal oder dreimal hohe oder sehr hohe Energie erzeugt werden für einen vorgenannten Zeitraum, und dazwischen keine Energie oder nur geringe Energie. Dieses Muster ist dann sehr charakteristisch und eindeutig, es kann also nicht mit einer normalen Bedienung verwechselt werden. Gleichzeitig sorgt es für mehrfach eindeutig erkennbare Temperaturänderungen, die mit dem Temperatursensor erfasst werden können.

Eine Dauer des Erzeugens von hoher oder sehr hoher Energie kann 5 sec bis 30 sec betragen, vorzugsweise 10 sec bis 20 sec. Dies reicht aus, um selbst schwere Kochgefäße mit hoher Wärmekapazität aufzuheizen bzw. ihre Temperatur eindeutig erkennbar zu ändern.

Eine Dauer des Erzeugens von geringer Energie kann 10 sec bis 40 sec betragen, vorzugsweise 15 sec bis 25 sec. Dies reicht aus, um auch bei den vorgenannten Kochgefäßen nicht nur keinen weiteren Anstieg der Temperatur zu bewirken, sondern in der Regel einen wenn auch geringen Abfall. Dies verbessert die Erkennbarkeit sowie die Eindeutigkeit noch einmal.

Eine Dauer des Erzeugens von hoher Energie kann in jedem Zyklus in etwa gleich lang sein, vorzugsweise genau gleich lang. Dies kann auch für eine Dauer des Erzeugens von geringer Energie in jedem Zyklus gelten.

Bevorzugt ist eine Dauer des Erzeugens von geringer Energie in jedem Zyklus länger als eine Dauer des Erzeugens von hoher Energie, vorzugsweise sogar 30 % bis 100 % länger. Dadurch wird der vorgenannte Temperaturabfall während dieser Zeit sichergestellt.

Eine Dauer eines gesamten Zyklus kann 40 sec bis 240 sec betragen, vorzugsweise 70 sec bis 110 sec. Dies benötigt dann bei einem zweimaligen oder dreimaligen Durchlaufen des Zyklus insgesamt eine gewisse Zeit, dafür ist aber die Zuordnung eines smarten Kochgefäßes zu einer Heizeinrichtung dann sicher und eindeutig.

In Ausgestaltung der Erfindung kann jeder Zyklus identisch sein zu dem anderen Zyklus, insbesondere kann nur eine einzige Art von Zyklus vorgesehen sein. Dabei kann die Identität des Zyklus auch für Heizeinrichtungen mit unterschiedlicher absoluter maximal dauerhaft erzeugbarer Energie gelten, indem die Heizeinrichtungen Energie mit jeweils der gleichen Energiedichte als Energie pro Flächeneinheit der Heizeinrichtung erzeugen. So ist auch eine gewisse Vergleichbarkeit gegeben.

Das Verfahren kann in einer Weiterbildung der Erfindung auf einem mobilen Endgerät oder einem externen Steuergerät mit Steuerung bzw. Auswertevorrichtung und Empfangseinrichtung durchgeführt werden, wenn eine App auf dem mobilen Endgerät aktiv ist oder wenn das externe Steuergerät aktiviert ist. Das mobile Endgerät oder externe Steuergerät ist dabei mit dem Kochfeld verbunden zur Ansteuerung des Kochfelds sowie der Leistungsversorgung der Heizeinrichtung.

Die Sendevorrichtung am Kochgefäß kann ausgewählt sein aus der Gruppe: Bluetooth, BLE, Zigbee, NFC, WiFi. Vor allem BLE bietet sich an, da der Energieverbrauch gering ist und die übliche Reichweite von BLE für diese Anwendung ausreicht.

Vorteilhaft kann das Verfahren nur an denjenigen Heizeinrichtungen des Kochfelds durchgeführt werden, deren Heizbereich nur genau einem Kochgefäß zugeordnet ist oder auf die nur ein einziges Kochgefäß aufgestellt werden kann. Außerdem sind es besonders vorteilhaft Heizeinrichtungen, die alleine zum Beheizen eines Kochgefäßes vorgesehen sind. Dann ist die Erzeugung des spezifischen Musters von Energie und die Erkennung an einem Kochgefäß leichter und sicherer.

Das Kochfeld gemäß der Erfindung ist zur Durchführung des vorgenannten Verfahrens ausgebildet, wobei vorzugsweise das Kochfeld mehrere Induktionsheizspulen als Heizelemente aufweist, die jeweils einzeln eine Heizeinrichtung bilden können oder auch gemeinsam eine Heizeinrichtung bilden können. Jeder Induktionsheizspule oder jeder Gruppierung von Induktionsheizspulen ist dabei mindestens ein Heizbereich zugeordnet, vorteilhaft genau ein Heizbereich.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Darstellung eines Systems mit erfindungsgemäßem Induktionskochfelds und einem auf einen Heizbereich einer Induktionsheizspule aufgesetzten Kochgefäß,
- Fig. 2: eine vereinfachte Darstellung der Funktionalitäten des Kochgefäßes mit Temperatursensoren, Auswertevorrichtung und Sendevorrichtung,
- Fig. 3: ein Muster für eine Leistungserzeugung an der Induktionsheizspule zur Energieerzeugung.

### DETAILLIERTE BESCHREIBUNG DER AUSFÜHRUNGSBEISPIELE

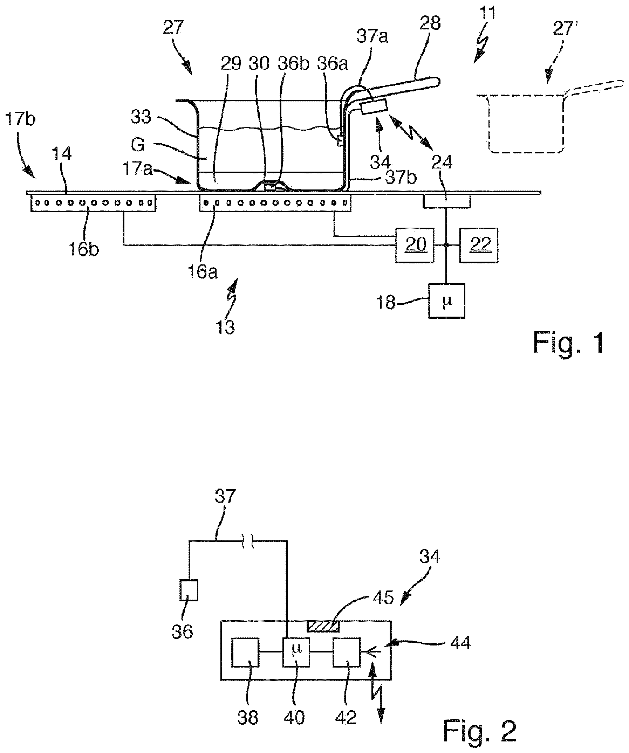

In der Fig. 1 ist ein erfindungsgemäßes System 11 dargestellt mit einem erfindungsgemäßen Induktionskochfeld 13 und einem Kochgefäß 27. Das Induktionskochfeld 13 weist eine Kochfeldplatte 14 auf, unter der beispielhaft zwei Induktionsheizspulen 16a und 16b mit etwas Abstand angeordnet sind. In der Praxis sind dies vorteilhaft mehr Induktionsheizspulen 16, beispielsweise vier oder sechs oder acht oder sogar bis zu zwanzig oder dreißig Induktionsheizspulen bei sogenannten Flächenkochfeldern. Die Induktionsheizspulen können jeweils einzeln eine vorgenannte Heizeinrichtung bilden oder auch gemeinsam eine Heizeinrichtung bilden. Jeder Induktionsheizspule oder jeder Gruppierung von Induktionsheizspulen ist dabei mindestens ein Heizbereich zugeordnet, die auch Kochstellen genannt werden.

Des Weiteren weist das Induktionskochfeld 13 eine Kochfeld-Steuerung 18 auf, die mit einer Leistungsversorgung 20, einer Empfangseinrichtung 22 zur drahtlosen Kommunikation und einer Bedieneinrichtung 24 an der Unterseite der Kochfeldplatte 14 verbunden ist. Diese Funktionseinheiten sind jeweils wie üblich ausgebildet. Die Leistungsversorgung weist vorteilhaft Leistungsschalter in üblicher Verschaltung auf, insbesondere abhängig von der Art der Heizeinrichtungen. Hier für die Induktionsheizspulen 16 sind elektrische Leistungsschalter bzw. eine Leistungselektronik vorgesehen. Sind die Heizeinrichtungen durch übliche Strahlungsheizeinrichtungen gebildet, so können hier übliche Relais verwendet werden. Die Bedieneinrichtung 24 weist Bedienelemente auf, vorzugsweise als Berührungsschalter, sowie vorteilhaft optische Anzeigemittel wie Leuchtanzeigen und/oder Displays und auch akustische Anzeigemittel wie ein Summer oder Piepser. Ein Funkstandard für die Empfangseinrichtung 22 kann grundsätzlich vielfältig ausgebildet sein, wie eingangs erläutert worden ist. Vorteilhaft ist er ausgewählt aus den Möglichkeiten Bluetooth bzw. BLE, aber auch ZigBee, WLAN oder ähnliche, sowie proprietäre Lösungen ohne einen allgemeingültigen Standard.

Oberhalb der Induktionsheizspulen 16a und 16b ist jeweils eine Kochstelle 17a und 17b gebildet mit einer Fläche, die jeweils in etwa der Fläche der Induktionsheizspulen 16 entspricht. Auf der rechten Kochstelle 17a ist ein erfindungsgemäßes Kochgefäß 27 mit Kochgefäßboden 29 und Kochgefäßwandung 33 sowie einem Griff 28 angeordnet bzw. dort auf die Oberseite der Kochfeldplatte 14 aufgesetzt. Darin befindet sich ein allgemeines Gargut G, beispielsweise Wasser bzw. flüssiges Gargut. Das Kochgefäß 27 weist in einer Ausnehmung 30 des Kochgefäßbodens 29 einen vorgenannten Temperatursensor 36b auf. Der Temperatursensor 36b ist ausgebildet wie üblich, insbesondere auch ausreichend temperaturstabil, beispielsweise als PT100 oder als PT1000. Der Temperatursensor 36b erfasst die Temperatur des Kochgefäßbodens 29. Dies ist wichtig für die zuvor beschriebene Temperaturerfassung bzw. Erfassung einer Temperatur des Kochgefäßbodens 29 sowie deren Änderung. Diese Temperatur des Kochgefäßbodens 29 ändert sich bei Betrieb der Induktionsspule 16a und steigt insbesondere an, wenn die Induktionsspule 16a Leistung bzw. Energie erzeugt und an das Kochgefäß 27 bzw. den Kochgefäßboden 29 überträgt. Der Temperatursensor 36b ist mittels eines Anschlusskabels 37b mit einem Kochgefäßmodul 34 verbunden, das in der Fig. 2 in Vergrößerung dargestellt ist und nachfolgend noch im Detail erläutert wird. Das Kochgefäßmodul 34 steht in drahtloser Kommunikation bzw. Funkverbindung mit der Empfangseinrichtung 22 im Induktionskochfeld 13.

Das Kochgefäßmodul 34 kann des Weiteren alternativ oder zusätzlich mittels eines Anschlusskabels 37a mit einem Temperatursensor 36a verbunden sein, der im Inneren des Kochgefäßes 27 angeordnet ist, vorteilhaft an der Innenseite der Kochgefäßwandung 33. Dieser Temperatursensor 36a kann vor allem die Temperatur des Garguts G direkt erfassen, was für die eingangs genannten Automatikprogramme von Vorteil sein kann. Unter Umständen kann die Temperatur des Garguts G noch besser für ein Automatikprogramm verwendet werden als die Temperatur des Kochgefäßbodens 29, die der Temperatursensor 36b erfassen kann. Schließlich soll ja das Gargut G zubereitet werden. Dieser Temperatursensor 36a könnte auch noch tiefer und somit noch näher beim Kochgefäßboden 29 angeordnet sein.

Rechts ist nahe am Induktionskochfeld 13 ein weiteres Kochgefäß 27' gestrichelt dargestellt, das ausgebildet sein soll wie das zuvor beschriebene Kochgefäß 27. Allerdings ist dieses gestrichelt dargestellte Kochgefäß 27' nicht nur nicht über derselben Induktionsspule 16a angeordnet, sondern gar nicht auf dem Induktionskochfeld 13. Es wird also von keiner Induktionsheizspule 16 des Induktionskochfelds 13 beheizt und kann auch gar nicht beheizt werden. Allerdings ist es derart nahe an der Empfangseinrichtung 22 angeordnet, dass diese auch Signale und somit Temperaturdaten von diesem Kochgefäß 27' erhält. Allerdings zeigen diese Temperaturdaten eine weitgehend gleichbleibende Temperatur an, da dieses Kochgefäß 27' ja eben nicht beheizt wird und somit seine Temperatur eigentlich nicht oder zumindest nicht nennenswert verändert. Dieses Kochgefäß 27' soll veranschaulichen, wie nachfolgend noch erläutert wird, dass eine Unterscheidung verschiedener Kochgefäße eben wichtig ist, wie sie mit der Erfindung besonders gut vorgenommen werden kann.

In der Fig. 2 ist das Kochgefäßmodul 34 in Vergrößerung dargestellt. Mittels des Anschlusskabels 37 ist das Kochgefäßmodul 34 mit dem Temperatursensor 36 verbunden, der einer der Temperatursensoren 36b und 36a sein kann. Zusätzlich zu einem oder zwei Temperatursensoren können noch weitere Sensoren wie Drucksensoren, Gewichtssensoren odgl. vorgesehen sein.

Des Weiteren weist das Kochgefäßmodul 34 einen Energiespeicher 38 auf, der ein Akkumulator sein kann und der keine besonders großen Energiemengen speichern können muss, vor allem wenn mit Bluetooth bzw. BLE oder Zigbee gesendet wird, dies aber möglichst schnell und verlustfrei sein sollte. Im Kochgefäßmodul 34 ist des Weiteren ein integrierter Schaltkreis als Auswertevorrichtung 40 vorgesehen, vorteilhaft als Mikrocontroller. Die Auswertevorrichtung 40 steuert eine Sendevorrichtung 42 des Kochgefäßes 27 mit Sendeantenne 44 an, vorteilhaft ausgelegt für den vorgenannten Bluetooth- bzw. BLE-Standard oder Zigbee. Die Sendevorrichtung 42 steht also in vorgenannter drahtloser Kommunikation bzw. Funkverbindung mit der Empfangseinrichtung 22. So werden eine individuelle bzw. spezielle und einzigartige Identifikation des Kochgefäßes 27 und die jeweiligen Temperaturdaten zumindest eines der Temperatursensoren 36b oder 36a an die Empfangseinrichtung 22 übertragen.

Das Kochgefäßmodul 34 kann mittels eines Magneten 45 magnetisch am Griff 28 angebracht werden, beispielsweise an der Unterseite nahe zur Kochgefäßwandung 33. Dadurch wird die Funktionalität des Griffs 28 möglichst wenig beeinträchtigt. Als Alternative zu einer magnetischen Befestigung kann eine dauerhafte Verbindung vorgesehen sein. Als nochmals weitere Alternative kann eine Befestigung am Griff 28 mit einer Art Schelle oder Band erfolgen. Vorteilhaft kann das Kochgefäßmodul 34 samt Temperatursensor 36a leicht und besonders vorteilhaft werkzeuglos vom Kochgefäß 27 entfernt werden. Eine elektrische Verbindung an den fest im Kochgefäßboden 29 angeordneten Temperatursensor 36b könnte mittels einer Steckverbindung trennbar ausgebildet sein. Durch das Kochgefäßmodul 34 ist das Kochgefäß 27 ein zuvor beschriebenes smartes Kochgefäß.

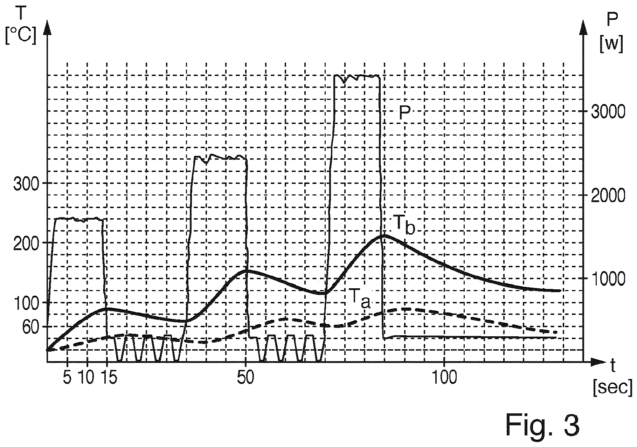

In der Fig. 3 ist ein Beispiel eines bestimmten vorgegebenen zeitlichen Musters für eine Leistungserzeugung bzw. Energieerzeugung für die Induktionsheizspule 16a alleine dargestellt. In ähnlicher Form könnte auch die Induktionsspule 16b betrieben werden, um zu erfassen, ob über ihr ein smartes Kochgefäß 27 angeordnet ist. Zum Zeitpunkt t = 0 wird die Induktionsheizspule 16a von der Leistungsversorgung 20 angesteuert mit einer nennenswerten bzw. mittelhohen Leistung von P = 1.750 W. Dies erfolgt nach Art einer eines langen Pulses für 15 sec. Dann sinkt die Leistung stark ab und wird gepulst mit nur noch geringer Höhe, hier etwa variierend zwischen 0 W und 300 W. Dies bildet eine Art weitgehende Pause in der Energieerzeugung.

Zum Zeitpunkt t = 36 sec wird die Induktionsheizspule 16a wieder betrieben mit hoher Leistung von etwa P = 2.450 W, und zwar erneut für die Dauer von 15 sec wie zuvor. Dann wird die Leistung wieder stark abgesenkt für eine Dauer von etwa 20 sec mit schwachen Leistungspulsen wie zuvor. Zum Zeitpunkt t = 72 sec wird die Induktionsheizspule 16a zum dritten Mal betrieben mit sehr hoher Leistung von P = 3.450 W, und zwar erneut für die Dauer von 15 sec wie zuvor. Nach dieser dritten sehr hohen Leistungserzeugung bzw. Erzeugung von Energie wird die Induktionsheizspule 16a mit einer geringen dauerhaften Leistung von P = 300 W betrieben. Dieses Muster der Erzeugung von Leistungen bzw. Energie bildet einen eingangs genannten Zyklus. Dieser wird wiederholt, sodass er insgesamt zweimal oder sogar dreimal durchgeführt wird.

Mit dicker Linierung ist der Verlauf der Temperaturen Tₐ und T_{b} über der Zeit t dargestellt, wobei die Temperatur Tₐ strichliert dargestellt ist. Die Temperatur Tₐ wird vom Temperatursensor 36a erfasst, die Temperatur T_{b} wird vom Temperatursensor 36b erfasst. Die Temperatur T_{b} im Kochgefäßboden 29 steigt während der ersten Energieerzeugung auf etwa 85°C an und sinkt dann während der geringen Energieerzeugung auf etwas über 60°C ab. Die Temperatur Tₐ steigt deutlich langsamer entsprechend der Temperatur des Garguts G auf nur 40°C und sinkt dann wieder etwas ab.

Während der zweiten hohen Energieerzeugung steigt die Temperatur T_{b} an auf etwa 160°C, die Temperatur Tₐ dagegen nur auf etwa 70°C, und das mit einiger Verzögerung. Dann fallen die Temperaturen während der geringen Energieerzeugung ab auf 120°C bzw. 60°C.

Während der dritten sehr hohen Energieerzeugung steigt die Temperatur T_{b} an auf etwa 210°C, die Temperatur Tₐ dagegen nur auf etwa 85°C, und das erneut mit einiger Verzögerung. Danach fallen die Temperaturen während der dauerhaft geringen Energieerzeugung wieder ab.

Entsprechend dem eingangs genannten Verfahren werden am Ende der jeweiligen Energieerzeugung die Werte für die Temperaturen Tₐ bzw. T_{b}, möglicherweise auch ein jeweils kurz danach erzeugter maximaler Wert, von der Auswertevorrichtung 40 erfasst, möglicherweise auch in ihrem gesamten zeitlichen Verlauf, und daraus die entstehenden Temperaturdifferenzen während der der jeweiligen Energieerzeugung berechnet. Dies sind die eingangs genannten Temperaturdaten. Die Auswertevorrichtung 40 sendet sie mittels der Sendevorrichtung 42 an die Kochfeld-Steuerung 18. Für den Verlauf der Temperatur T_{b} sind dies 65°C, 100°C und 90°C. Da der Verlauf der Temperatur Tₐ offensichtlich auch noch vom Gargut G abhängt, werden für die Plausibilitätsprüfungen nur die Temperatur T_{b} bzw. deren Temperaturdifferenzen verwendet.

Die Kochfeld-Steuerung ermittelt die während der dreimaligen hohen Energieerzeugung von der Induktionsheizspule 16a erzeugte und an das Kochgefäß 27 übertragene Energie. Das sind beim ersten Mal 26,2 kWsec, beim zweiten Mal 36,8 kWsec und beim dritten Mal 51,8 kWsec. Wird dann jeder dieser Werte durch die Temperaturdifferenz aufgrund der Energieerzeugung zwischen Anfang und Ende der Energieerzeugung geteilt als Relation bzw. als Verhältnis, so ergeben sich für die Temperatur T_{b} 403 Wsec/°C, 368 Wsec/°C und 575 Wsec/°C. Diese Werte werden abgespeichert. Ein in der Steuerung 18 abgespeicherter Plausibilitätsbereich kann hier beispielsweise zwischen 200 Wsec/°C und 900 Wsec/°C liegen oder sogar zwischen 300 Wsec/°C und 700 Wsec/°C liegen. Da die genannten Werte in diesem Plausibilitätsbereich liegen ist dieser Teil der Prüfung als positiv bestanden. Alternativ könnte auch nur der letzte Temperaturwert verwendet werden, also nur die 575 Wsec/°C. Dieser liegt aber auch deutlich im genannten Plausibilitätsbereich. Dann würde aber die Überprüfung der dreimaligen hohen Energieerzeugung entfallen, die sich mit den genannten drei Werten deutlich von einer durchgehenden mittleren Energieerzeugung unterscheidet und auch die Unterscheidbarkeit zu einem zufälligen Erzeugen der Energie ermöglicht.

Für das 2. Plausibilitätsergebnis wird das Verhältnis der ersten zeitlichen Ableitung der durch die Induktionsheizspule 16a erzeugten Energie zur maximalen ersten zeitlichen Ableitung der Temperatur T_{b} am Temperatursensor 36b ermittelt als erfindungsgemäße Relation. Dies wird gemacht indem zuerst durch Beobachten der ersten zeitlichen Ableitung der Temperatur T_{b} über einen Zeitraum von einigen sec, beispielsweise jeweils 5 sec lang, der höchste Wert für diese erste zeitliche Ableitung ermittelt wird. Wenn 5 sec lang ein Wert nicht wieder überschritten worden ist, so wird dieser als höchster Punkt bzw. maximaler Wert genommen. Der jeweils maximale Wert für die erste zeitliche Ableitung der Temperatur T_{b} ist hier bei der ersten hohen Energieerzeugung 6°C/sec, bei der zweiten hohen Energieerzeugung 6,7°C/sec und bei der dritten 8,6°C/sec. Diese Werte können abgespeichert werden. Bildet man als erfindungsgemäße Relation das Verhältnis der ersten zeitlichen Ableitung der durch die Induktionsheizspule 16a erzeugten Energie zur ersten zeitlichen Ableitung der Temperatur T_{b} am Temperatursensor 36b, so ergeben sich hier die Werte 292 Wsec/°C, 365 Wsec/°C und 401 Wsec/°C als Plausibilitätsergebnisse. Ein Plausibilitätsbereich kann hier beispielsweise zwischen 100 Wsec/°C und 600 Wsec/°C liegen, so dass die genannten Plausibilitätsergebnisse jeweils darin liegen. Auch diese Plausibilitätsprüfung ist positiv und somit bestanden.

Als 3. Plausibilitätsergebnis wird die Veränderung der absoluten Temperatur T_{b} am Temperatursensor 36b am Ende der niedrigen Energieerzeugung, über wenige Sekunden, ermittelt, hier also ein Temperaturabfall von jeweils 55°C am Ende der niedrigen Energieerzeugung als Plausibilitätsergebnis. Ein Plausibilitätsbereich kann hier zwischen +5°C und -60°C liegen, so dass auch diese 3. Plausibilitätsprüfung positiv und somit bestanden ist.

Da somit alle drei Plausibilitätsprüfungen positiv waren, wird das Kochgefäß 27 mit seiner übersandten Identifikation der Induktionsheizspule 16a zugeordnet. Die Steuerung 18 kann dann ein Automatikprogramm für das Kochgefäß 27 starten, wobei hier für eine Temperaturregelung vor allem der Temperatursensor 36a verwendet werden kann. Die Temperaturdaten bzw. Temperaturergebnisse werden dann zur Regelung der Induktionsheizspule 16a verwendet.

Wäre eine der drei Plausibilitätsprüfungen negativ gewesen, so wäre keine Zuordnung des Kochgefäßes 27 erfolgt. Dies ist zwar ein strenger Prüfungsmaßstab, aber so können Fehler vermieden werden.

Das rechts in Fig. 1 dargestellte Kochgefäß 27' kann zwar auch seine Identifikation und Temperaturdaten aussenden, die aber wohl eine unveränderte Temperatur anzeigen, da es ja nicht beheizt wird. Somit wird das Kochgefäß 27' keiner Induktionsheizspule 16 zugeordnet, vor allem nicht der Induktionsheizspule 16a, die Energie erzeugt hat zum Erkennen eines smarten Kochgefäßes.

Sollte für eine weitere Induktionsheizspule am Kochfeld 13, beispielsweise die Induktionsheizspule 16b, untersucht werden, ob ein smartes Kochgefäß darüber angeordnet ist, so wird sie auch mit einem Muster an Energieerzeugung ähnlich Fig. 3 angesteuert. Die Verwendung desselben Musters an Energieerzeugung ist völlig problemlos, da die Prüfung hier zu einem anderen Zeitpunkt als bei der Induktionsheizspule 16a erfolgt. Steht kein smartes Kochgefäß darüber, empfängt die Steuerung 18 nur die Temperaturdaten des Kochgefäßes 27. Diese Temperaturdaten passen aber nicht zu dem Muster an Energieerzeugung, sondern entsprechen eben dem Betrieb der Induktionsheizspule 16a. Dies registriert die Steuerung 18, und es erfolgt keine Änderung der Zuordnung des Kochgefäßes 27, und der Induktionsheizspule 16b wird auch kein Kochgefäß zugeordnet.

Steht ein smartes Kochgefäß über der Induktionsheizspule 16b, so empfängt die Steuerung 18 die Temperaturdaten beider Kochgefäße 27, wobei nur diejenigen des Kochgefäßes 27 über der Induktionsheizspule 16b zu dem Muster an Energieerzeugung passen. Ist hier die Überprüfung der Plausibilitäten erfolgreich so erfolgt die entsprechende Zuordnung.

## Patentansprüche

1. Verfahren zum Beheizen eines Kochgefäßes (27) auf einem Kochfeld (13), wobei:
- das Kochfeld (13) mehrere Heizeinrichtungen (16) aufweist,
- jede Heizeinrichtung (16) einen Heizbereich (17) aufweist,
- ein Kochgefäß (27) den Heizbereich (17) überdeckend angeordnet werden kann,
- jede Heizeinrichtung (16) zum Erzeugen und Übertragen von Energie ausgebildet ist zum Beheizen eines darüber angeordneten Kochgefäßes (27) und dazu von einer Leistungsversorgung (20) angesteuert wird,
- das Kochgefäß (27) einen Temperatursensor (36) samt Auswertevorrichtung (40) und eine Sendevorrichtung (42) zum Senden einer Identifikation und von Temperaturdaten aufweist in Abhängigkeit von empfangener Energie von einer Heizeinrichtung (16) in Form eines Temperaturanstiegs am Temperatursensor (36), wobei dabei der Heizbereich (17) der Heizeinrichtung (16) von dem Kochgefäß (27) zumindest teilweise überdeckt wird,
- eine Empfangseinrichtung (22) für das Kochfeld (13) vorgesehen ist zum Empfangen der Identifikation und der Temperaturdaten einer Sendevorrichtung (42) eines Kochgefäßes (27) oder aller Sendevorrichtungen (42) von Kochgefäßen (27) auf dem Kochfeld (13) oder im Empfangsbereich der Empfangseinrichtung (22),
- eine Steuerung (18) für das Kochfeld (13) vorgesehen ist, die die Identifikation und die Temperaturdaten von der Empfangseinrichtung (22) erhält und auswertet hinsichtlich Informationen zu einem Übertragen von Energie der Heizeinrichtung (16), wobei das Verfahren die folgenden Schritte aufweist:
- mindestens ein vorgenanntes Kochgefäß (27) wird über einem Heizbereich (17) einer Heizeinrichtung (16) angeordnet,
- mindestens diese Heizeinrichtung (16) wird angesteuert von der Leistungsversorgung (20) zum Erzeugen und Übertragen von Energie an das Kochgefäß (27) in einem Zyklus, wobei dabei Dauer und/oder Maximalwert des Übertragens von Energie variiert werden, wobei die Variation in einem Zyklus darin besteht, dass
∘ der Maximalwert der übertragenen Energie über der Zeit variiert, und/oder
∘ die Dauer des Übertragens von Energie variiert, und/oder
∘ die Dauer zwischen zwei Vorgängen des Übertragens von Energie variiert, und/oder
∘ die Anzahl der Vorgänge des Übertragens von Energie variiert,
- der Temperatursensor (36) des Kochgefäßes (27) registriert eine Änderung oder einen Anstieg der Temperatur infolge des Übertragens von Energie,
- die Auswertevorrichtung (40) des Kochgefäßes (27) wertet den zeitlichen Verlauf der Temperatur als Temperaturdaten aus und sendet die Identifikation und die Temperaturdaten mittels der Sendevorrichtung (42) an die Empfangseinrichtung (22),
- die Steuerung (18) hat oder erhält die Identifikation und die Temperaturdaten von der Sendevorrichtung (42) und der Empfangseinrichtung (22), vorzugsweise alle Identifikationen und Temperaturdaten, die von Kochgefäßen (27) empfangen werden,
**dadurch gekennzeichnet, dass** das Verfahren die weiteren Schritte aufweist:
- die Steuerung (18) berechnet, vorzugsweise am Ende jedes Zyklus:
∘ als ein 1. Plausibilitätsergebnis eine Relation der durch die Heizeinrichtung (16) erzeugten Energie zur entstandenen Temperaturdifferenz am Temperatursensor (36) und
∘ als ein 2. Plausibilitätsergebnis eine Relation der ersten zeitlichen Ableitung der durch die Heizeinrichtung (16) erzeugten Energie zur maximalen ersten zeitlichen Ableitung der Temperatur am Temperatursensor (36),
- das 1. und das 2. Plausibilitätsergebnis werden von der Steuerung (18) zwischengespeichert,
- nach jedem Zyklus wird für die empfangenen Temperaturdaten eine Überprüfung der Veränderung der absoluten Temperatur am Temperatursensor (36) durchgeführt und diese Veränderung wird als ein 3. Plausibilitätsergebnis von der Steuerung (18) zwischengespeichert,
- der Zyklus des Erzeugens und Übertragens von Energie wird mindestens zweimal durchgeführt auf dieselbe Art und Weise und bei jedem und nach jedem Durchführen werden die drei Plausibilitätsergebnisse jeweils berechnet und zwischengespeichert,
- die Steuerung (18) führt für jedes der drei Plausibilitätsergebnisse eine Plausibilitätsprüfung durch, bei der überprüft wird, ob das jeweilige Plausibilitätsergebnis in einem dafür vordefinierten und in der Steuerung (18) abgespeicherten Plausibilitätsbereich liegt,
- wobei in dem Fall, dass alle drei Plausibilitätsprüfungen positiv waren, das Kochgefäß (27) mit dieser Identifikation der Heizeinrichtung (16) zugeordnet wird, an das zuvor die Energie erzeugt und übertragen hat,
- und wobei in dem Fall, dass mindestens eine Plausibilitätsprüfung negativ war, das Kochgefäß (27) mit dieser Identifikation nicht dieser Heizeinrichtung (16) und insbesondere keiner Heizeinrichtung (16) zugeordnet wird,
- wobei diese Schritte als Überprüfung für alle von der Empfangseinrichtung (22) empfangenen Identifikationen und Temperaturdaten von Kochgefäßen (27) mit Temperatursensor (36), Auswertevorrichtung (40) und Sendevorrichtung (42) durchgeführt werden,
- wobei in dem Fall, dass keine Überprüfung von Temperaturdaten eines Kochgefäßes (27) bei allen drei Plausibilitätsprüfungen während der mindestens zwei Zyklen positiv war, die Steuerung (18) davon ausgeht, dass kein Kochgefäß (27) mit Temperatursensor (36) samt Auswertevorrichtung (40) und Sendevorrichtung (42) auf der Heizeinrichtung (16) aufgestellt ist.

2. Verfahren nach Anspruch 1, **dadurch gekennzeichnet, dass** in dem Fall, dass nur genau eine einzige Überprüfung von Temperaturdaten eines Kochgefäßes (27) bei allen drei Plausibilitätsprüfungen während der mindestens zwei Zyklen positiv war, von genau einem einzigen Kochgefäß (27) mit Temperatursensor (36) samt Auswertevorrichtung (40) und Sendevorrichtung (42) auf der Heizeinrichtung (16) ausgegangen wird.

3. Verfahren nach Anspruch 1 oder 2, **dadurch gekennzeichnet, dass** in dem Fall, dass mehrere Überprüfungen von Temperaturdaten eines Kochgefäßes (27) bei allen drei Plausibilitätsprüfungen während der mindestens zwei Zyklen positiv waren, überprüft wird, ob die Temperaturdaten von verschiedenen Kochgefäßen mit verschiedenen Identifikationen empfangen worden sind, wobei in diesem Fall keine Zuordnung eines Kochgefäßes (27) zu einer Heizeinrichtung (16) erfolgt, wobei in dem Fall, dass die Temperaturdaten von einem einzigen Kochgefäß (27) empfangen worden sind, dieses Kochgefäß (27) der Heizeinrichtung (16) zugeordnet wird.

4. Verfahren nach einem der vorhergehenden Ansprüche, **dadurch gekennzeichnet, dass** in dem Fall, dass nur eine einzige Überprüfung von Temperaturdaten eines Kochgefäßes (27) bei allen drei Plausibilitätsprüfungen während der mindestens zwei Zyklen positiv war und das hierzu gehörige Kochgefäß (27) aber schon einer anderen Heizeinrichtung (16) zugeordnet war, keine neue Zuordnung erfolgt.

5. Verfahren nach einem der vorhergehenden Ansprüche, **dadurch gekennzeichnet, dass** in dem Fall, dass mehrere Überprüfungen von Temperaturdaten bei allen drei Plausibilitätsprüfungen während der mindestens zwei Zyklen positiv waren, das Kochgefäß (27), dessen Temperaturdaten überprüft worden sind und dabei die Plausibilitätsprüfungen positiv waren, aber schon einer anderen Heizeinrichtung (16) zugeordnet ist als demjenigen, das die Energie erzeugt und übertragen hat, ein Fehler erkannt wird, wobei vorzugsweise dann jede Zuordnung eines Kochgefäßes (27) zu einer Heizeinrichtung (16) bei dem Kochfeld (13) gelöscht wird.

6. Verfahren nach einem der vorhergehenden Ansprüche, **dadurch gekennzeichnet, dass** es gleichzeitig nur mit einer einzigen Heizeinrichtung (16) des Kochfelds (13) durchgeführt wird, wobei vorzugsweise andere Heizeinrichtungen (16) des Kochfelds (13) zwar betrieben werden zum Erzeugen und Übertragen von Energie, aber nicht entsprechend einem vorgenannten Zyklus.

7. Verfahren nach einem der Ansprüche 1 bis 5, **dadurch gekennzeichnet, dass** es gleichzeitig mit mindestens zwei Heizeinrichtungen (16) des Kochfelds (13) durchgeführt wird, wobei bei den beiden Heizeinrichtungen (16) das Erzeugen und Übertragen von Energie hinsichtlich mindestens einer der vorgenannten Variationen von Maximalwert, Dauer des Übertragens, Dauer zwischen zwei Vorgängen oder Anzahl der Vorgänge unterschiedlich ist.

8. Verfahren nach einem der vorhergehenden Ansprüche, **dadurch gekennzeichnet, dass** das Kochgefäß (27) neben der Sendevorrichtung (42) noch einen integrierten Schaltkreis (40) aufweist, vorzugsweise auch einen Energiespeicher (38) wie Batterie, Akkumulator oder Kondensator aufweist.

9. Verfahren nach einem der vorhergehenden Ansprüche, **dadurch gekennzeichnet, dass** die Heizeinrichtung (16) von der Leistungsversorgung (20) derart angesteuert wird, dass in einem Zyklus mindestens zweimal, vorzugsweise dreimal, Energie mit mehr als 30% der maximalen dauerhaft erzeugbaren Energie als hohe Energie erzeugt wird und übertragen wird, wobei zwischen jedem Mal von Erzeugen von hoher Energie die Heizeinrichtung (16) derart angesteuert wird, dass geringe Energie mit weniger als 15 % der maximalen dauerhaft erzeugbaren Energie erzeugt wird, wobei insbesondere in einem Zyklus das Erzeugen von hoher Energie mit mehr als 30 % der maximal dauerhaft erzeugbaren Energie ansteigt nach einem Erzeugen von geringerer Energie.

10. Verfahren nach Anspruch 9, **dadurch gekennzeichnet, dass** eine Dauer des Erzeugens von hoher Energie 5 sec bis 30 sec beträgt und/oder dass eine Dauer des Erzeugens von geringer Energie 10 sec bis 40 sec beträgt.

11. Verfahren nach Anspruch 9 oder 10, **dadurch gekennzeichnet, dass** eine Dauer des Erzeugens von hoher Energie in jedem Zyklus gleich lang ist, vorzugsweise auch eine Dauer des Erzeugens von geringer Energie in jedem Zyklus gleich lang ist, und/oder dass eine Dauer des Erzeugens von geringer Energie in jedem Zyklus länger ist als eine Dauer des Erzeugens von hoher Energie, vorzugsweise 30 % bis 100 % länger ist, wobei vorzugsweise eine Dauer eines gesamten Zyklus 40 sec bis 240 sec beträgt.

12. Verfahren nach einem der vorhergehenden Ansprüche, **dadurch gekennzeichnet, dass** jeder Zyklus identisch ist zu dem anderen Zyklus, insbesondere nur eine einzige Art von Zyklus, wobei vorzugsweise die Identität des Zyklus auch für Heizeinrichtungen (16) mit unterschiedlicher absoluter maximal dauerhaft erzeugbaren Energie gilt, indem die Heizeinrichtungen (16) Energie mit jeweils der gleichen Energiedichte als Energie pro Flächeneinheit erzeugen.

13. Verfahren nach einem der vorhergehenden Ansprüche, **dadurch gekennzeichnet, dass** das Verfahren auf einem mobilen Endgerät oder einem externen Steuergerät mit Steuerung und Empfangseinrichtung durchgeführt wird, wenn eine App auf dem mobilen Endgerät aktiv ist oder wenn das externe Steuergerät aktiviert ist, wobei das mobile Endgerät oder externe Steuergerät mit dem Kochfeld (13) verbunden ist zur Ansteuerung des Kochfelds (13) sowie der Leistungsversorgung (20) der Heizeinrichtung (16).

14. Verfahren nach einem der vorhergehenden Ansprüche, **dadurch gekennzeichnet, dass** das Verfahren nur an denjenigen Heizeinrichtungen (16) durchgeführt wird, deren Heizbereich (17) nur genau einem Kochgefäß (27) zugeordnet ist.

15. Kochfeld (13) ausgebildet zur Durchführung des Verfahrens nach einem der vorhergehenden Ansprüche, wobei vorzugsweise das Kochfeld (13) mehrere Induktionsheizspulen (16) als Heizeinrichtungen aufweist, wobei jedem Heizbereich (17) mindestens eine Induktionsheizspule (16) zugeordnet ist.

## Claims

1. A method for heating a cooking vessel (27) on a hob (13), wherein:
- the hob (13) has a plurality of heating devices (16),
- each heating device (16) has a heating region (17),
- a cooking vessel (27) is arranged so as to cover the heating region (17),
- each heating device (16) is designed to generate and transmit energy for heating a cooking vessel (27) arranged above it and for this purpose is controlled by a power supply (20),
- the cooking vessel (27) has a temperature sensor (36) together with an evaluation apparatus (40) and a transmitting apparatus (42) for transmitting an identification and temperature data on the basis of received energy from a heating device (16) in the form of a temperature increase at the temperature sensor (36), wherein the heating region (17) of the heating device (16) is at least partially covered by the cooking vessel (27),
- a receiving device (22) is provided for the hob (13) for the purpose of receiving the identification and the temperature data from a transmitting apparatus (42) of a cooking vessel (27) or from all transmitting apparatuses (42) of cooking vessels (27) on the hob (13) or in the receiving region of the receiving device (22),
- a controller (18) is provided for the hob (13), which controller (18) receives the identification and the temperature data from the receiving device (22) and evaluates the identification and the temperature data with respect to information relating to transmission of energy from the heating device (16),
wherein the method has the following steps:
- at least one said cooking vessel (27) is arranged above a heating region (17) of a heating device (16),
- at least this heating device (16) is controlled by the power supply (20) in order to generate and transmit energy to the cooking vessel (27) in a cycle, wherein the duration and/or maximum value of the transmission of energy is/are varied, wherein the variation in a cycle involves
o the maximum value of the transmitted energy varying over time, and/or
o the duration of the transmission of energy varying, and/or
o the duration between two operations of transmitting energy varying, and/or
o the number of operations of transmitting energy varying,
- the temperature sensor (36) of the cooking vessel (27) registers a change or an increase in the temperature on account of the transmission of energy,
- the evaluation apparatus (40) of the cooking vessel (27) evaluates the temperature profile varying over time as temperature data and transmits the identification and the temperature data to the receiving device (22) by means of the transmitting apparatus (42),
- the controller (18) has or receives the identification and the temperature data from the transmitting apparatus (42) and the receiving device (22) of the cooking vessel (27),
**characterized in that** the method has the further steps of:
- the controller (18) calculates, preferably at the end of each cycle:
o as a first plausibility result, a relationship of the energy generated by the heating device (16) with respect to the resulting temperature difference at the temperature sensor (36), and
o as a second plausibility result, a relationship of the first temporal derivative of the energy generated by the heating device (16) with respect to the maximum first temporal derivative of the temperature at the temperature sensor (36),
- the first and second plausibility results are buffered by the controller (18),
- after each cycle, the change in the absolute temperature at the temperature sensor (36) is checked for the received temperature data and this change is buffered by the controller (18) as a third plausibility result,
- the cycle of generating and transmitting energy is carried out at least twice in the same manner and the three plausibility results are each calculated and buffered during each carrying-out said operation and after each carrying-out said operation,
- the controller (18) carries out a plausibility check for each of the three plausibility results, during which a check is carried out in order to determine whether the respective plausibility result is in a plausibility range predefined for this result and stored in the controller (18),
- wherein, if all three plausibility checks were positive, the cooking vessel (27) with this identification is assigned to the heating device (16) which previously generated and transmitted the energy,
- and wherein, if at least one plausibility check was negative, the cooking vessel (27) with this identification is not assigned to this heating device (16) and/or is not assigned to any heating device (16),
- wherein these steps are carried out as a check for all identifications and temperature data of cooking vessels (27) having a temperature sensor (36), an evaluation apparatus (40) and a transmitting apparatus (42) that are received by the receiving device (22),
- wherein, if no check of temperature data of a cooking vessel (27) was positive in all three plausibility checks during the at least two cycles, the controller (18) assumes that no cooking vessel (27) having a temperature sensor (36) together with an evaluation apparatus (40) and a transmitting apparatus (42) has been placed on the heating device (16).

2. The method as claimed in claim 1, wherein, if only precisely one single check of temperature data of a cooking vessel (27) was positive in all three plausibility checks during the at least two cycles, precisely one single cooking vessel (27) having a temperature sensor (36) together with an evaluation apparatus (40) and a transmitting apparatus (42) on the heating device (16) is assumed.

3. The method as claimed in claim 1 or 2, wherein, if a plurality of checks of temperature data of a cooking vessel (27) were positive in all three plausibility checks during the at least two cycles, a check is carried out in order to determine whether the temperature data have been received from different cooking vessels (27) with different identifications, wherein a cooking vessel (27) is not assigned to a heating device (16) in this case, wherein, if the temperature data have been received from a single cooking vessel (27), this cooking vessel (27) is assigned to the heating device (16).

4. The method as claimed in one of the preceding claims, wherein, if only one single check of temperature data of a cooking vessel (27) was positive in all three plausibility checks during the at least two cycles, but the associated cooking vessel (27) has already been assigned to another heating device (16), no new assignment is carried out.

5. The method as claimed in one of the preceding claims, wherein, if a plurality of checks of temperature data were positive in all three plausibility checks during the at least two cycles, the cooking vessel (27) whose temperature data have been checked and for which the plausibility checks were positive but which has already been assigned to a heating device (16) other than that which generated and transmitted the energy, a fault is detected and each assignment of a cooking vessel (27) to a heating device (16) in the hob (13) is deleted.

6. The method as claimed in one of the preceding claims, wherein the method is simultaneously carried out only with a single heating device (16) of the hob (13), wherein preferably, although other heating devices (16) of the hob (13) are operated for the purpose of generating and transmitting energy, they are not operated according to an above-mentioned cycle.

7. The method as claimed in one of the claims 1 to 5, wherein the method is simultaneously carried out with at least two heating devices (16) of the hob (13), wherein the generation and transmission of energy in the two heating devices (16) is different with respect to at least one of the above-mentioned variations of maximum value, transmission duration, duration between two operations or the number of operations.

8. The method as claimed in one of the preceding claims, wherein, in addition to the transmitting apparatus (42), the cooking vessel (27) also has an integrated circuit (40) and preferably also has an energy store (38) such as a battery, a rechargeable battery or a capacitor.

9. The method as claimed in one of the preceding claims, wherein the heating device (16) is controlled by the power supply (20) in such a manner that energy with more than 30% of the maximum energy which can be permanently generated is generated and transmitted as high energy at least twice in a cycle, preferably at least three times, wherein, between each process of generating high energy, the heating device (16) is controlled in such a manner that low energy with less than 15% of the maximum energy which can be permanently generated is generated, wherein in particular in a cycle the generation of high energy with more than 30% of the maximum energy which can be permanently generated increases after generation of lower energy.

10. The method as claimed in claim 9, wherein a duration of generating high energy is 5 seconds to 30 seconds, and/or a duration of generating low energy is 10 seconds to 40 seconds.

11. The method as claimed in claim 9 or 10, wherein a duration of generating high energy is identical in each cycle, preferably also a duration of generating low energy is identical in each cycle, and/or that a duration of generating low energy in each cycle is longer than a duration of generating high energy, preferably is 30% to 100% longer, wherein preferably a duration of an entire cycle is 40 seconds to 240 seconds.

12. The method as claimed in one of the preceding claims, wherein each cycle is identical to the other cycle, and in particular there is only a single type of cycle, wherein preferably the identity of the cycle also applies to heating devices (16) with different absolute maximum energy which can be permanently generated by virtue of the heating devices (16) generating energy with the same energy density in each case as energy per unit area.

13. The method as claimed in one of the preceding claims, wherein the method is carried out on a mobile terminal or an external control device with a controller and a receiving device if an app on the mobile terminal is active or if the external control device is activated, wherein the mobile terminal or external control device is connected to the hob (13) for the purpose of controlling the hob (13) and the power supply (20) of the heating device (16).

14. The method as claimed in one of the preceding claims, wherein the method is carried out only on those heating devices (16) whose heating region (17) is assigned to only precisely one cooking vessel (27).

15. A hob (13) designed to carry out the method as claimed in one of the preceding claims, wherein preferably the hob (13) has a plurality of induction heating coils (16) as heating devices, wherein at least one induction heating coil (16) is assigned to each heating region (17).

## Revendications

1. Procédé permettant de chauffer un récipient de cuisson (27) sur une plaque de cuisson (13), dans lequel :
- la plaque de cuisson (13) présente plusieurs dispositifs chauffants (16),
- chaque dispositif chauffant (16) présente une zone de chauffage (17),
- un récipient de cuisson (27) peut être disposé de manière à couvrir la zone de chauffage (17),
- chaque dispositif chauffant (16) est réalisé pour produire et transmettre de l'énergie afin de chauffer un récipient de cuisson (27) disposé au-dessus de celui-ci, et est à cet effet piloté par une alimentation électrique (20),
- le récipient de cuisson (27) présente un capteur de température (36) avec un dispositif d'évaluation (40) et un dispositif émetteur (42) pour émettre une identification et des données de température en fonction de l'énergie reçue d'un moyen chauffant (16) sous la forme d'une montée en température au niveau du capteur de température (36), dans lequel la zone de chauffage (17) du dispositif chauffant (16) est alors au moins partiellement recouverte par le récipient de cuisson (27),
- un dispositif récepteur (22) pour la plaque de cuisson (13) est prévu pour recevoir l'identification et les données de température d'un dispositif émetteur (42) d'un récipient de cuisson (27) ou de tous les dispositifs émetteurs (42) des récipients de cuisson (27) sur la plaque de cuisson (13) ou dans la zone de réception du dispositif récepteur (22),
- une commande (18) pour la plaque de cuisson (13) est prévue qui reçoit l'identification et les données de température du dispositif récepteur (22) et les évalue quant à des informations concernant une transmission d'énergie du dispositif chauffant (16),
le procédé présentant les étapes suivantes :
- ledit au moins un récipient de cuisson (27) est disposé au-dessus d'une zone de chauffage (17) d'un dispositif chauffant (16),
- ledit au moins un dispositif chauffant (16) est piloté par l'alimentation électrique (20) pour produire et transmettre de l'énergie au récipient de cuisson (27) au cours d'un cycle, dans lequel on fait varier la durée et/ou la valeur maximale de la transmission d'énergie, la variation au cours d'un cycle consistant à
o faire varier la valeur maximale de l'énergie transmise dans le temps, et/ou
o faire varier la durée de la transmission d'énergie, et/ou
o faire varier la durée entre deux opérations de transmission d'énergie, et/ou
o faire varier le nombre des opérations de transmission d'énergie,
- le capteur de température (36) du récipient de cuisson (27) enregistre un changement ou une montée de la température suite à la transmission d'énergie,
- le dispositif d'évaluation (40) du récipient de cuisson (27) évalue la courbe dans le temps de la température comme des données de température et émet l'identification et les données de température au moyen du dispositif émetteur (42) au dispositif récepteur (22),
- la commande (18) dispose de l'identification et des données de température ou les reçoit du dispositif émetteur (42) et du dispositif récepteur (22), de préférence de toutes les identifications et données de température qui sont reçues du récipient de cuisson (27),
**caractérisé en ce que** le procédé présente les étapes supplémentaires :
- la commande (18) calcule, de préférence à la fin de chaque cycle :
o comme un premier résultat de plausibilité, une relation entre l'énergie produite par le dispositif chauffant (16) et la différence de température créée au niveau du capteur de température (36), et
o comme un deuxième résultat de plausibilité, une relation entre une première dérivée temporelle de l'énergie produite par le dispositif chauffant (16) et la première dérivée temporelle maximale de la température au niveau du capteur de température (36),
- le premier et le deuxième résultat de plausibilité sont mis en mémoire tampon par la commande (18),
- après chaque cycle, un contrôle du changement de la température absolue est effectué au niveau du capteur de température (36) pour les données de température reçues, et ce changement est mis en mémoire tampon par la commande (18) comme un troisième résultat de plausibilité,
- le cycle de production et de transmission d'énergie est exécuté au moins deux fois de la même manière, et pendant et après chaque exécution, les trois résultats de plausibilité sont respectivement calculés et mis en mémoire tampon,
- la commande (18) effectue pour chacun des trois résultats de plausibilité un contrôle de plausibilité qui contrôle si le résultat de plausibilité respectif se situe dans une plage de plausibilité prédéfinie à cet effet et mémorisée dans la commande (18),
- dans lequel, si l'ensemble des trois contrôles de plausibilité était positif, le récipient de cuisson (27) ayant cette identification est associé au dispositif chauffant (16) qui a précédemment produit et transmis l'énergie,
- et dans lequel, si au moins un contrôle de plausibilité était négatif, le récipient de cuisson (27) ayant cette identification n'est pas associé à ce dispositif chauffant (16) et n'est en particulier associé à aucun dispositif chauffant (16),
- dans lequel ces étapes sont effectuées comme un contrôle pour toutes les identifications et données de température des récipients de cuisson (27) avec capteur de température (36), dispositif d'évaluation (40) et dispositif émetteur (42), reçues par le dispositif récepteur (22),
- dans lequel, si aucun contrôle des données de température d'un récipient de cuisson (27) n'était positif lors de l'ensemble des trois contrôles de plausibilité pendant les au moins deux cycles, la commande (18) part du principe qu'aucun récipient de cuisson (27) à capteur de température (36) avec dispositif d'évaluation (40) et dispositif émetteur (42) n'est posé sur le dispositif chauffant (16).

2. Procédé selon la revendication 1, **caractérisé en ce que** si exactement un seul contrôle des données de température d'un récipient de cuisson (27) seulement était positif lors de l'ensemble des trois contrôles de plausibilité pendant les au moins deux cycles, on part du principe d'exactement un seul récipient de cuisson (27) à capteur de température (36) avec dispositif d'évaluation (40) et dispositif émetteur (42) sur le dispositif chauffant (16).

3. Procédé selon la revendication 1 ou 2, **caractérisé en ce que** si plusieurs contrôles des données de température d'un récipient de cuisson (27) étaient positifs lors de l'ensemble des trois contrôles de plausibilité pendant les au moins deux cycles, on contrôle si les données de température ont été reçues de différents récipients de cuisson avec différentes identifications, dans lequel, dans ce cas aucune association d'un récipient de cuisson (27) à un dispositif chauffant (16) n'a lieu, dans lequel si les données de température ont été reçues d'un seul récipient de cuisson (27), ledit récipient de cuisson (27) est associé au dispositif chauffant (16).

4. Procédé selon l'une quelconque des revendications précédentes, **caractérisé en ce que** si un seul contrôle de données de température d'un récipient de cuisson (27) seulement était positif lors de l'ensemble des trois contrôles de plausibilité pendant les au moins deux cycles, mais le récipient de cuisson (27) associé était déjà associé à un autre dispositif chauffant (16), aucune nouvelle association n'a lieu.

5. Procédé selon l'une quelconque des revendications précédentes, **caractérisé en ce que** si plusieurs contrôles de données de température lors de l'ensemble des trois contrôles de plausibilité des au moins deux cycles étaient positifs, le récipient de cuisson (27) dont les données de température ont été contrôlées et pour lequel les contrôles de plausibilité étaient positifs, mais qui est déjà associé à un autre dispositif chauffant (16) qu'à celui qui a produit et transmis l'énergie, une erreur est reconnue, dans lequel de préférence chaque association d'un récipient de cuisson (27) à un dispositif chauffant (16) est alors supprimée au niveau de la plaque de cuisson (13).

6. Procédé selon l'une quelconque des revendications précédentes, **caractérisé en ce qu'**il n'est exécuté en même temps qu'avec un seul dispositif chauffant (16) de la plaque de cuisson (13), dans lequel de préférence les autres dispositifs chauffants (16) de la plaque de cuisson (13) fonctionnent effectivement pour produire et transmettre de l'énergie, mais pas selon ledit cycle.

7. Procédé selon l'une quelconque des revendications 1 à 5, **caractérisé en ce qu'**il est exécuté en même temps avec au moins deux dispositifs chauffants (16) de la plaque de cuisson (13), dans lequel la production et la transmission d'énergie au niveau des deux dispositifs chauffants (16) se distinguent au moins quant à l'une desdites variations de la valeur maximale, de la durée de la transmission, de la durée entre deux opérations ou du nombre des opérations.

8. Procédé selon l'une quelconque des revendications précédentes, **caractérisé en ce que** le récipient de cuisson (27) présente en plus du dispositif émetteur (42) encore un circuit intégré (40), de préférence aussi un stockage d'énergie (38), tel qu'une batterie, un accumulateur ou un condensateur.

9. Procédé selon l'une quelconque des revendications précédentes, **caractérisé en ce que** le dispositif chauffant (16) est piloté par l'alimentation électrique (20) de telle sorte que dans un cycle, de l'énergie est produite au moins deux fois, de préférence trois fois, avec plus de 30 % de l'énergie maximale pouvant être produite durablement sous forme d'énergie élevée et est transmise, dans lequel entre chaque production d'énergie élevée, le dispositif chauffant (16) est piloté de telle sorte qu'une énergie faible, de moins de 15 % de l'énergie maximale pouvant être produite durablement, est produite, dans lequel en particulier dans un cycle, la production d'énergie élevée avec plus de 30 % de l'énergie maximale pouvant être produite durablement augmente après une production d'énergie plus faible.

10. Procédé selon la revendication 9, **caractérisé en ce qu'**une durée de la production d'énergie élevée est de 5 s à 30 s, et/ou **en ce qu'**une durée de la production d'énergie faible est de 10 s à 40 s.

11. Procédé selon la revendication 9 ou 10, **caractérisé en ce qu'**une durée de la production d'énergie élevée dans chaque cycle est de longueur identique, de préférence une durée de la production d'énergie faible dans chaque cycle est également identique, et/ou **en ce qu'**une durée de la production d'énergie faible dans chaque cycle est plus longue qu'une durée de la production d'énergie élevée, de préférence de 30 % à 100 % plus longue, dans lequel de préférence une durée d'un cycle total est de 40 s à 240 s.

12. Procédé selon l'une quelconque des revendications précédentes, **caractérisé en ce que** chaque cycle est identique à un autre cycle, en particulier un seul type de cycle, dans lequel de préférence l'identité du cycle est valable aussi pour des dispositifs chauffants (16) ayant une énergie maximale pouvant être produite absolue différente **en ce que** les dispositifs chauffants (16) produisent de l'énergie ayant respectivement la même densité d'énergie comme énergie par unité de superficie.

13. Procédé selon l'une quelconque des revendications précédentes, **caractérisé en ce que** le procédé est exécuté sur un terminal mobile ou un appareil de commande externe avec une commande et un dispositif récepteur si une appli est active sur le terminal mobile ou si l'appareil de commande externe est activé, dans lequel le terminal mobile ou l'appareil de commande externe est relié à la plaque de cuisson (13) pour piloter la plaque de cuisson (13) ainsi que l'alimentation électrique (20) du dispositif chauffant (16) .

14. Procédé selon l'une quelconque des revendications précédentes, **caractérisé en ce que** le procédé n'est exécuté que sur les dispositifs chauffants (16) dont la zone de chauffage (17) est associée à exactement un récipient de cuisson (27).

15. Plaque de cuisson (13) réalisée pour exécuter le procédé selon l'une quelconque des revendications précédentes, dans lequel de préférence la plaque de cuisson (13) présente comme dispositifs chauffants plusieurs bobines de chauffage par induction (16), au moins une bobine de chauffage par induction (16) étant associée à chaque zone de chauffage (17).
